**Europäisches Patentamt**

**European Patent Office**

**Office européen des brevets**

(11) Veröffentlichungsnummer: **0 031 164**
**A1**

(12) # EUROPÄISCHE PATENTANMELDUNG

(21) Anmeldenummer: **80108087.0**

(22) Anmeldetag: **20.12.80**

(51) Int. Cl.³: **B 23 Q 1/26**
**F 16 C 29/02**

(30) Priorität: **20.12.79 DE 2951456**
**29.01.80 DE 3002978**

(43) Veröffentlichungstag der Anmeldung:
**01.07.81 Patentblatt 81/26**

(84) Benannte Vertragsstaaten:
**AT BE CH FR GB IT LI LU NL SE**

(71) Anmelder: **Koukal, Anton**
**Pfarrstrasse 6**
**D-7326 Heiningen(DE)**

(72) Erfinder: **Koukal, Anton**
**Pfarrstrasse 6**
**D-7326 Heiningen(DE)**

(74) Vertreter: **Lutz, Johannes Dieter, Dr.**
**Tiroler Strasse 15**
**D-7250 Leonberg(DE)**

(54) **Gleitführungseinrichtung an Arbeitsmaschinen.**

(57) Es wird eine Gleitführungseinrichtung (130) an Arbeitsmaschinen angegeben, bei denen ein bewegliches Maschinenelement (131) z.B. ein Maschinentisch oder ein Werkzeugkopf eine Vorschubbewegung in mindestens zwei zueinander rechtwinkligen Richtungen ausführt, wobei die Vorschubgeschwindigkeit mindestens zeitweise sehr gering sein kann. Für das bewegliche Maschinenelement (131) vorgesehene Führungselemente (132), z.B. Rundstäbe, deren Mantelfläche mindestens auf einem Sektorbereich von einer Gleitfläche (167) umschlossen ist, an der das geführt-verschiebbare Maschinenelement (131) gleitet, sind drehbar gelagert und mit einer Umfangsgeschwindigkeit antreibbar, die den Reibungswiderstand zwischen den aneinander gleitenden Fläche (132, 167) in dem für einen niedrigen Wert der Gleitreibung charakteristischen Bereich hält. In einer Gestaltung sind als Führungselemente drehbare Wellen vorgesehen, an denen sich das geführte Maschinenelement über Gleitstücke abstützt. In einer dazu alternativen Gestaltung sind an dem die Vorschubbewegung ausführenden Maschinenteil (131) drehbar antreibbare Führungszylinder (132) gelagert, die in Führungsbahnen (137) des ruhenden Maschinenteils (17) gleitend verschiebbar angeordnet sind.

Fig. 8

Anton Koukal

Pfarrstraße 6

7326 Heiningen

P 79 101

17.12.1980

GLEITFÜHRUNGSEINRICHTUNG AN ARBEITSMASCHINEN

Die Erfindung betrifft eine Gleitführungseinrichtung an Arbeitsmaschinen,bei denen ein relativ zu einem feststehenden Maschinengestell geführt bewegbares Maschinenelement,z.B.ein Maschinentisch oder ein Werkzeugkopf eine Vorschubbewegung mit mindestens zeitweise geringer Vorschubgeschwindigkeit ausführt,wobei ein zylindrisches Führungselement,z.B.ein Rundstab,vorgesehen ist,dessen Mantelfläche mindestens auf einem Sektorbereich von einer Gleitfläche des geführt verschiebbaren Elements umschlossen ist.

Gleitführungseinrichtungen dieser Art werden insbesondere für Arbeitsmaschinen benötigt,die Koordinatenantriebe für zwei zu einander rechtwinklig verlaufende Vorschubrichtungen haben,z.B.in der Holzbearbeitungstechnik Profil-fräsmaschinen oder in der Brennschneid-Technik Kreuz-wagen-Brennschneidmaschinen.Es versteht sich jedoch,daß solche Gleitführungseinrichtungen auch bei Arbeitsma-schinen eingesetzt werden können,bei denen das geführte Maschinenelement nur in einer vorgegebenen Richtung eine Vorschubbewegung ausführt.

Das der Erfindung zugrunde liegende Problem soll im folgenden ohne Beschränkung der Allgemeinheit am Beispiel einer durch photoelektrische Abtastung einer Vorlage koordinaten-gesteuerten Kreuzwagen-Brennschneidmaschine erläutert wer-den:

bei Kreuzwagen-Brennschneidmaschinen wird die der Vorlagenkontur folgende Bewegung des Tastkopfes und eines oder mehrerer Schneidbrenner durch Überlagerung einer in der X-Ko-ordinatenrichtung(Längsrichtung)mit einer in der dazu recht-winkligen Y-Koordinatenrichtung(Querrichtung)ablaufenden Vorschubbewegung erzielt.Eine bestimmte Bahn-bzw.Schnitt-geschwindigkeit v von größenordnungsmäßig 100mm/min der Brenner entlang der Werkstückkontur sowie eine bestimmte Richtung $\varphi$ bezüglich der Hauptachse(der X-Achse des Bezugs-Koordinatensystems)vorausgesetzt,bedeutet dies,daß sich die Schneidbrenner mit der Geschwindigkeitskomponente $v_x = v \cdot \cos \varphi$ in X-Richtung und mit der Geschwindigkeits-komponente $v_y = v \cdot \sin \varphi$ in der Y-Richtung bewegen müssen. Diese Zusammensetzung der Bahnbewegung aus zwei zueinander rechtwinkligen Bewegungskomponenten wird mit Hilfe des Kreuzwagens erzielt;dieser umfaßt einen in X-Richtung hin-und herverfahrbaren Längswagen,auf dem in Y-Richtung ein Querträger montiert ist,an dem ein die Schneidbrenner und den Tastkopf tragende,in Y-Richtung hin-und herverfahrbarer Querwagen angeordnet ist.Der Längs-und der Querwagen sind je durch einen spannungsgesteuerten Koordinatenmotor angetrieben,die mit den erforderlichen Geschin-
digkeitskomponenten-proportionalen Spannungssignalen,welche von der die Richtung der Vorlagenkontur erfassenden
photoelektrischen Abtasteinrichtung erzeugt werden gesteuert werden.Für eine gute Schnittqualität,d.h.möglichst
geringe Breite und Tiefe der sich beim Brennschneiden ausbildenden Riefen,ist es erforderlich,daß die Schneidbahn
mit möglichst konstanter Geschwindigkeit durchlaufen wird.
Schwingungsartige Schwankungen der Bahngeschwindigkeit und/
oder Auslenkungen der Brenner quer zu ihrer Bahngeschwindigkeit,beeinträchtigen,insbesondere dann,wenn solche Schwingungen niederfrequent sind,d.h.etwa im Bereich zwischen
10 und 30 Hz liegen,die Schnittqualität erheblich.Solche
störenden Schwankungen der Bahnbewegung können bei Verwendung von Gleitführungen,obwohl diese an sich einen günstig schwingungsdämpfendes Führungsverhalten haben,aber
gerade dann auftreten,wenn sich einer der Koordinatenwagen über einen längeren Zeitraum in einer dem Anfahrzustand vergleichbaren Betriebszustand befindet.Dies ist
beispielsweise dann der Fall,wenn die Schneidbahn unter
einem flachen Winkel $\phi$ zu einer der beiden Koordinatenrichtungen verläuft,sodaß der eine der Koordinatenwagen
praktisch mit voller Vorschubgeschwindigkeit fährt während
sich der andere nur mit einer im Vergleich dazu sehr kleinen Vorschubgeschwindkigkeit bewegt.Eine analoge Situation
liegt vor,wenn die Schneidbahn gekrümmt ist oder ein parallel zu einer der Koordinatenachsen verlaufender Bahnabschnitt durchlaufen wird.Es kann dann sehr leicht ein-

- 4 -

treten,daß der sich mit der kleineren Vorschub-Geschwindigkeitskomponente bewegende Koordinatenwagen Stotter(stickslip)-Bewegungen ausführt,weil sich die Gleitreibungsverhältnisse,die bei sehr kleinen Geschwindigkeiten stark geschwindigkeitsabhängig sind,dauernd ändern.Aus diesem Grunde ist man in praxi dazu übergegangen,für die rechtwinklig zueinander verfahrbaren Koordinatenwagen Rollen- oder Kugelführungen zu verwenden,um die mit der Führung verknüpfte Reibung und die für die Koordinatenmotoren erforderliche Antriebsleistung möglichst klein zu halten. Solche Rollen- bzw.Kugelführungen haben aber wegen der im wesentlichen punktförmigen Abstützung der Koordinatenwagen an den Führungsbahnflächen den Nachteil,daß schon geringe Verschmutzungen dieser Führungsbahnen zu Erschütterungen und damit zur Anregung von Schwingungen des die Brenner tragenden Kreuzwagens führen können,die die Schnittqualität deutlich beeinträchtigen.Zwar können auch solche Schwingungen durch einen massiven und schweren Maschinenaufbau in vertretbaren Grenzen gehalten werden,wobei dann allerdings wieder entsprechend höhere Antriebsleistungen der Koordinatenmotoren und entsprechend höhere Ausgangsleistungen der die Steuersignale für die Motoren erzeugenden Ausgangs-Leistungsverstärker der photoelektrischen Abtasteinrichtung erforderlich sind,was wiederm mit erhöhtem Herstellungs- und damit auch Kostenaufwand verbunden ist.

Entsprechendes gilt sinngemäß für Maschinen wie beispielsweise in der Holzbearbeitungstechnik eingesetzte Profilfräsmaschinen,bei denen anstelle des Werkzeuges das Werkstück mittels einer Kreuzwagenanordnung auf einer koordinatengesteuerten Bahn geführt wird.

Aufgabe der Erfindung ist es daher,eine Gleitführungseinrichtung der eingangs genannten Art zu schaffen,die auch
bei geringen Vorschubgeschwindigkeiten eine weitestgehend
stotterfreie Bahnbewegung ermöglicht.

Diese Aufgabe wird erfindungsgemäß durch die im kennzeichnenden Teil des Patentanspruchs 1 genannten Merkmale gelöst.

Aus diesen Merkmalen resultierende technische Vorteile der
Erfindung sind zumindest die folgenden:

Mit Hilfe des rotierend angetriebenen Führungselements
kann eine genügend hohe Relativgeschwindigkeit zwischen
den aneinander gleitenden Mantelflächen des Führungselements und des geführten Maschinenelements eingestellt
werden,um den von den Koordinaten-Antriebsmotoren zu überwindenden Reibungswiderstand auf einem günstig niedrigen
Wert zu halten.Die erfindungsgemäße Einrichtung vereint
dadurch die einer Gleitführungseinrichtung innewohnenden
Vorteile,nämlich der exakten Führung,und guten Schwingungseigenschaften mit denjenigen einer Rollenführung,nämlich
des geringen Antriebs- und Steuerleistungsbedarfs.Zwar benötigt die erfindungsgemäße Einrichtung in jedem Falle
einen Antrieb für die rotierenden Führungselemente,sodaß
insoweit im Vergleich zu einer Rollenführung ein Mehraufwand gegeben ist;diesem stehen aber erhebliche Vereinfachungen hinsichtlich der Gestaltung der gleitend verschiebbar geführten Maschinenelemente gegenüber,so daß
der zur Schaffung einer erfindungsgemäßen Einrichtung insgesamt erforderliche technische Aufwand nicht größer ist
als bei einer Rollenführung.Der wesentliche Vorteil der
erfindungsgemäßen Gleitführungseinrichtung besteht darin,

/ 6

daß Stotterbewegungen(stick-slip-Bewegungen),die bei konventionellen Gleitführungen, insbesondere bei kleinen Vorschubgeschwindigkeiten in der einen oder anderen Richtung auftreten würden,zuverlässig vermieden werden und, daraus resultierend,auch eine höhere Arbeitsgenauigkeit solcher Arbeitsmaschinen erzielt wird.

Weitere,durch die alternative oder gegebenenfalls kombinierte Verwirklichung der Merkmale der Unteransprüche erzielbare Vorteile sind beispielsweise die folgenden:

Durch ein oder mehrere Stützlager gemäß den Merkmalen der Ansprüche 2 oder 3 wird vermieden,daß sich die Gleitführungswellen unter der Last der gleitend verschiebbar geführten Maschinenelemente,z.B.des Längs- und Querwagens eine eines das Werkstück tragenden Kreuzwagens durchbiegen und bei rotatorischem Antrieb der Führungswellen zu Quer-chwing schwingungen angeregt werden können;durch die Gestaltung solcher Stützlager und Lagerstücke des geführt verschiebbaren Maschinenelements gemäß den Merkmalen des Anspruchs 3 wird eine Einschränkung des Führungshubes vermieden und trotzdem eine wirksame Unterstützung der Gleitführungswellen und Schwingungsdämpfung erzielt.

Durch die die Gestaltung und Anordnung der Stützlager und der Gleitstücke des geführten Maschinenelements betreffenden Merkmale des Anspruchs 4 wird erreicht,daß das jeweilige geführt verschiebbare Maschinenelement formschlüssig an den Gleitführungswellen gelagert ist und nicht abgehoben werden kann.

Durch die Merkmale der Ansprüche 5 und 6 ist eine Vor- schub-Antriebseinheit umrissen,mit der sich auf elegante Weise der rotatorische Antrieb der Gleitführungswellen zur Erzielung des Arbeitsvorschubes ausnutzen läßt,wobei die Vorschubgeschwindigkeit in der jeweiligen Koordinatenrichtung und die Vorschubkraft durch gezielte Einstellung des Anstellwinkels der Drehachse eines sich an einer Gleitführungswelle abstützenden Reibrades bezüglich der Längsachse der Gleitführungswelle bzw.gezielte Wahl des Anpreßdruckes,mit dem sich das Reibrad an dem Mantel der Gleitführungswelle abstützt,einstellbar sind.

Die erfindungsgemäße Gleitführungseinrichtung vermittelt eine sehr esakte stotterfreie Führung der gleitend verschiebbaren Maschinenelemente und ist durch den toratorischen Antrieb ihrer Gleitführungselemente auch gegen eine Verschnutzung gut geschützt.

Wenn die zylindrischen Führungselemente als drehbar angetriebene Wellen ausgebildet sind,auf denen das jeweils verschiebbare Maschinenteil gleitet,ist es in Fällen,in denen ein großer Führungshub vorgesehen ist erforderlich, zwischen den Endlagern der Gleitführungswellen zusätzliche Stützlager vorzusehen,um ein "Durchhängen" der Gleitführungswellen unter der Last des geführten Maschinenelements und daraus resultierende Schwingungsanregungen zu vermeiden,wobei durch eine nur einen Sektorbereich der Gleitführungswellen unterstützende Gestaltung der Stützlager eine Einschränkung des Führungshubes vermieden werden kann. Eine solche Gestaltung einer Gleitführungseinrichtung kann jedoch für Arbeitsmaschinen mit großem Führungshub Probleme aufwerfen.

Je größer die Länge und gegebenenfalls der Querschnitt der Gleitführungswellen gewählt werden muß,um so größer wird auch deren Gewicht,und es müssen entsprechend mehr Stützlager vorgesehen werden,deren exakte Anordnung und Justierung einen hohen Arbeitsaufwand erfordert.Mit zunehmendem Gewicht der Gleitführungswellen und mit zunehmender Zahl der erforderlichen Stützlager erhöht sich auch die Lagerreibung und damit die für den rotatorischen Antrieb der Gleitführungswellen erforderliche Antriebsleistung.Es kommt hinzu,daß eine abriebbedingte Vergrösserung des Lagerspiels im Bereich der stark belasteten Stützlager die Schwingungsneigung der Gleitführungswellen vergrößert und damit die Arbeitsgenauigkeit der Arbeitsmaschine vermindern kann.

Diese insbesondere bei Arbeitsmaschinen mit großen Vorschubwegen auftretenden Problem werden gemäß einer bevorzugten Ausführungsform einer erfindungsgemäßen Gleitführungseinrichtung dadurch vermieden,daß der Führungszylinder,an dem die Vorschubbewegung ausführenden Maschinenelement drehbar-antreibbar gelagert ist und in einer Führungsbahn des demgegenüber ruhenden Maschinenteils,deren Gleitfläche den Führungszylinder auf dem Sektorbereich umschließt,gleitend-verschiebbar gelagert ist.Dies hat auch den Vorteil,daß der rotierend angetriebene Führungszylinder sehr viel kürzer sein kann als bei den vorstehend erläuterten Gestaltungen. Wenn beispielsweise das geführt verschiebbare Maschinenelement ein Maschinentisch ist,auf dem ein zu bearbeitendes Werkstück gehalten ist,dann genügt für eine sichere Führung des Maschinentisches ein Führungszylinder,dessen Länge allenfalls der in Vorschubrichtung gemessenen Länge des Maschinentisches entspricht.

Dadurch wird in praxi eine nicht unerhebliche Verminderung de
des von den Raotations-und Vorschub-Antriebsvorrichtungen
insgesamt zu überwindenden Reibungswiderstandes erzielt.
Es kommt hinzu,daß der von den Gleitführungsbahnen umgriffene Mantelsektorbereich des Führungszylinders identisch
mit dem zur Vorschubführung ausgenutzten Mantelsektorbereich ist,wobei dieser ohne Schwierigkeit deutlich größer
als 180°gewählt werden kann,sodaß unabhängig von der Anordnung des verschiebbaren Maschinenelementes ober-oder
unterhalb der Gleitführungsbahnen,eine formschlüssige
Sicherung gegen ein Abheben von der Führung gewährleistet
ist.

Eine mit einfachen Mitteln realisierbare diesbezügliche
Gestaltung der erfindungsgemäßen Gleitführungseinrichtung
ist durch die Merkmale des Anspruchs 8 angegeben,wobei
die Führungsbahnen als Schlitzrohre ausgebildet sind,durch
deren Schlitz Lagerstützen für den Führungszylinder bequem hindurchtreten können und in dessen Bereich auch hinreichend Raum für die für den rotatorischen Antrieb des
Führungszylinders erforderlichen Antriebsmittel vorhanden
ist.

In Verbindung mit den durch die Ansprüche 9 und 10 wiedergegebenen konstruktiven Möglichkeiten der zweckentsprechenden drehbaren Lagerung des Führungszylinders an dem
verschiebbaren Maschinenelement geeignete Gestaltungen
des Führungszylinders und der Antriebsvorrichtungen für
dessen rotatorischen Antrieb sind durch die alternativ,
gegebenenfalls auch in Kombination realisierbaren Merkmale der weiteren Unteransprüche 11-15 angegeben.

/ 10

Es versteht sich,daß eine erfindungsgemäße Gleitführungseinrichtung auch in der Weise realisiert sein kann,daß
in Verbindung mit dem verschiebbaren Maschinenelemente
mehrere,im Regelfall zwei,Führungszylinder und Führungsbahnen vorgesehen sind;damit schon allein durch eine solche Gestaltung beispielsweise ein Kippen des geführten
Maschinenelements ausgschlossen ist.

Weitere Einzelheiten und Merkmale der Erfindung ergeben
sich aus der nachfolgenden Beschreibung von Ausführungsbeispielsn anhand der Zeichnung:

Fig.1 · eine Profilfräsmaschine mit einer erfindungsgemäßen Gleitführungseinrichtung in stark vereinfachter schematischer Vorderansicht,

Fig.2 die Maschine gemäß Fig.1 in Draufsicht,

Fig.3 ein Vektordiagramm zur Erläuterung der durch
Überlagerung des X- und Y-Vorschubs zustande
kommenden Bahngeschwindigkeit,

Fig.4 eine erste Gestaltung eines im Rahmen einer
erfindungsgemäßen Gleitführungseinrichtung
einsetzbaren Stützlagers in einem rechtwinklig
zu den Achsen der Gleitführungswellen der erfindungsgemäßen Einrichtung verlaufenden Schnitt,

Fig.5 eine weitere Gestaltung eines Stützlagers in
einer der Fig.4 entsprechenden Darstellung,

Fig.6      eine in Verbindung mit der erfindungsgemäßen
Gleitführungseinrichtung einsetzbare Vorschub-
Antriebseinheit,in vereinfachter Schnittdarstellung,

Fig.7      ein Schaubild zur Erläuterung der Funktion der
Vorschub-Antriebseinheit gemäß Fig.6,

Fig.8      eine alternative Gestaltung einer erfindungsgemäßen Gleitführungseinrichtung mit einem
drehbar antreibbar an einem verschiebbar geführten Maschinenelement gelagerten Führungszylinder,der in einer Führungsbahn gleitend
verschiebbar gelagert ist,in abgebrochener,
perspektivischer Darstellung,

Fig.9      Einzelheiten einer speziellen Gestaltung einer
Antriebsvorrichtung für den Rotatorischen Antrieb des Führungszylinders in einer abgebrochenen,teilweise längs der vertikalen Längsmittelebene der Führungsbahn geschnittenen
Darstellung,

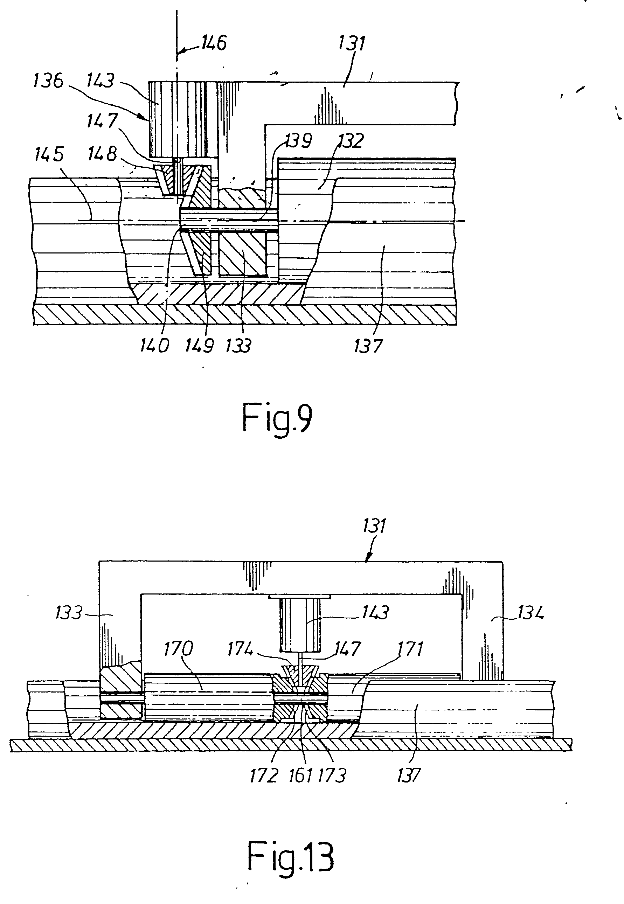

Fig.10,     Einzelheiten weiterer spezieller Gestaltungen
11 und 12  von Antriebsvorrichtungen für den rotatorischen
Antrieb des Führungszylinders in einer der
Fig.9 entsprechenden Darstellung und

Fig.13     Einzelheiten einer weiteren derartigen Antriebsvorrichtung,im wesentlichen im Schnitt rechtwinklig zur Vorschubrichtung.

- 12 -

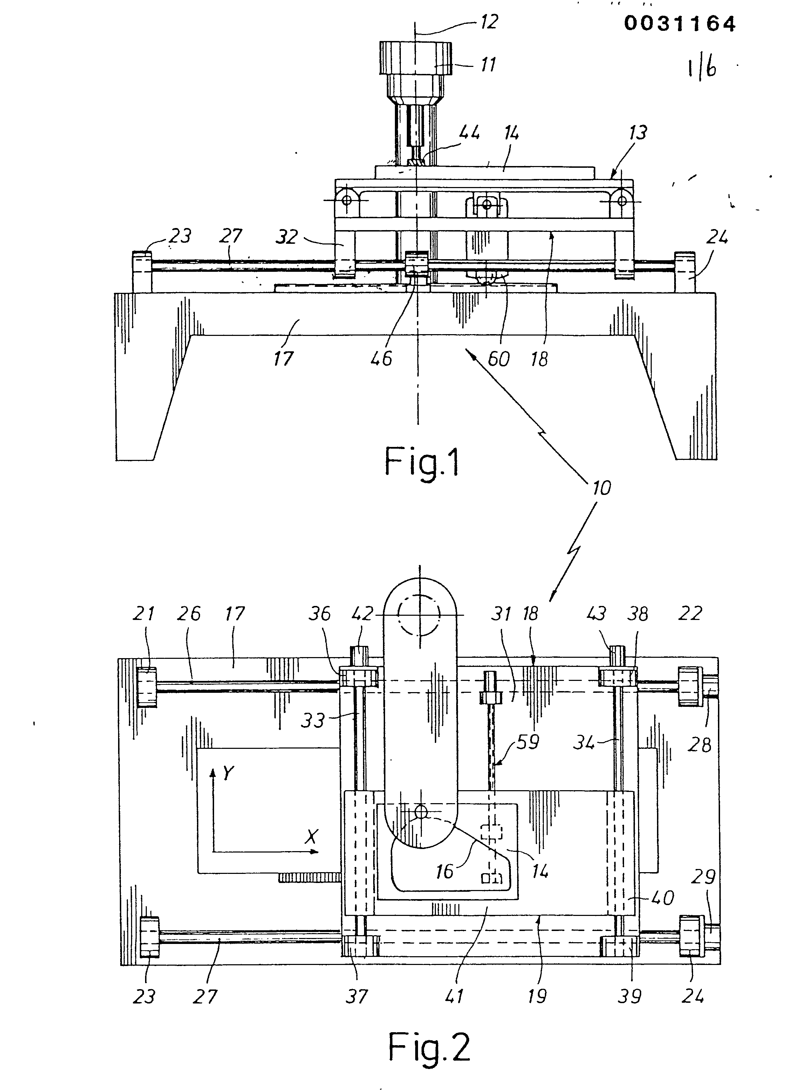

Die in den Figuren 1 und 2 in Ansicht bzw.Draufsicht dargestellte Profilfräsmaschine 10 hat einen feststehenden Maschinenkopf 11 mit vertikaler Fräserahhse 12 und einen insgesamt mit 13 bezeichneten Kreuzwagen,mit dem ein Werkstück 14,das als plattenförmig angenommen sei,entsprechend einer vorgesehenen Fräsbahnenkontur 16 in der rechtwinklig zur Fäserachse 12 verlaufenden Arbeitsebene in zueinander rechtwinkligen X- und Y-Koordinatenrichtungen gesteuert verfahrbar ist.

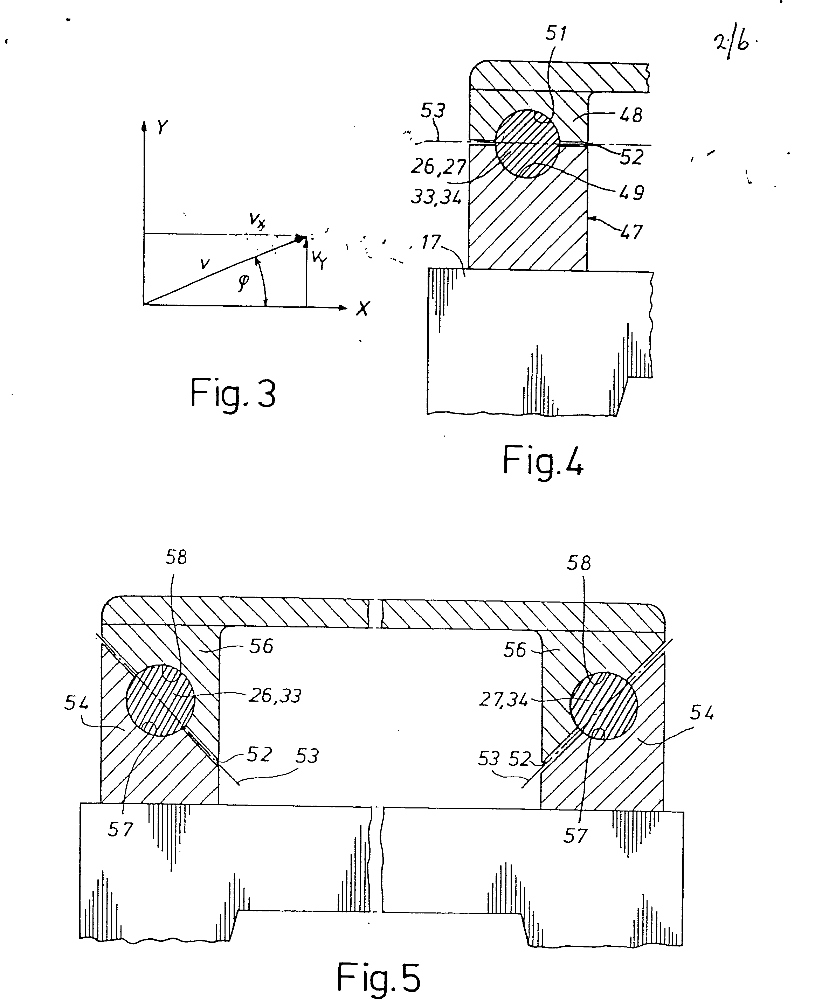

Die Profilfräsmaschine 10 sei als programmgesteuerte oder mittels einer die Kontur einer Zeichnungsvorlage abtastenden fotoelektrischen Abtasteinrichtung nachlaufgesteuerte Maschine vorausgesetzt,die entlang der Fräsbahn mit konstanter Bahngeschwindigkeit v arbeitet,die sich aus der geeignet gesteuerten geometrisch-additiven Überlagerung der Geschwindigkeitskomponenten $v_x$ und $v_y$ in den X-und Y-Koordinatenrichtungen ergibt(verg.Fig.3).Die zur Steuerung der Geschwindigkeitskomponenten vorgesehenen elektronischen Steuerungseinrichtungen sind der Einfachheit der Darstellung halber nicht gezeigt.

Das Maschinengestell der Maschine 10 umfaßt einen rechteckigen,in sich steifen horizontalen Rahmen 17,an dessen Oberseite in der aus den Figuren 1 und 2,auf deren diesbezügliche Einzelheiten ausdrücklich verwiesen sei,der in X-Richtung hin-und herverfahrbare Längswagen 18 des Kreuzwagens 13 an Gleitführungen gelagert ist.Auf den Längswagen 18 ist ebenfalls an Gleitführungen der Querwagen 19 des Kreuzwagens in Y-Richtung hin-und herverfahrbar gelagert.In den Eckbereichen des Maschinengestellrahmens 17 sind in der am besten aus der Fig.2 ersichtlichen Anord-

/ 13

nung Lagerstützen 21-24 für zwei parallele Stahlwellen angeordnet,die an den Lagerstützen 21-24 drehbar gelagert und mit Hilfe je eines Antriebsmotors 28 und 29 mit vorgebbarer und vorzugsweise gleicher Drehzahl antreibbar sind.Die drehbar gelagerten und antreibbaren Wellen 26 und 27 bilden die Längsführungselemente für den Längswagen 18.Der Längswagen 18 umfaßt eine etwa quadratische, sich über die Breite des Maschinengestellrahmens 17 erstreckende,horizontale Wagenplatte 31,an deren Unterseite in Ecken Gleitstücke 32 angeordnet sind,die in Verbindung mit den Längsführungswellen 26 und 27 die gleitende Längsführung des Längswagens 18 vermitteln.Diese Gleitstücke 32 können,wie aus der Fig.1 ersichtlich, als die Wellen 26 und 27 umschließende Gleitlagerschalen,bei Bedarf aber auch als sich lediglich an den Längsführungswellen abstützende halbschalenförmige Gleitstücke ausgebildet sein.

Auf analoge Weise ist der Querwagen 19 an der Oberseite des Längswagens 18 an sich in Y-Richtung erstreckenden, parallelen und rotierend antreibbaren Querwellen 33 und 34 gelagert,deren Lagerstützen 36-39 wiederum in den Ecken einer die Abstützfläche für das Werkstück 14 bildenden Querwagenplatte 41 angeordnet sind.Die Antriebsmotoren 42 und 43 für die Querführungswellen 33 und 34 sind jeweils an der Außenseite der dem Maschinenkopf 11 benachbarten Lagerstützen 36 bzw.38 des Längswagens 18 angeflanscht. Die Querwagenplatte 41 ist rechteckig,wobei ihre in X-Richtung gemessene Länge etwa der Breite der Längswagenplatte 31 und ihre Breite etwa der halben zwischen den Lagerstützen 36 und 37 bzw.38 und 39 gemessenen freien Länge der Querwellen 33 und 34 entspricht;der das Werkzeug,am dargestellten Ausführungsbeispiel den Fräser 44 tragende Maschinenkopf 11 ist so ausgebildet,daß die vertikale Fräserachse 12 gleichzeitig die zentrale Achse des Maschinengestells 17 markiert.In ihrer Funktion den Gleitstücken 32 des Längswagens 18 entsprechende Gleitstücke 46 des Querwagens 19 können als sich über die volle Breite der Querwagenplatte 41 erstreckend ausgebildet sein.Durch den rotierenden Antrieb der die Gleitführungselemente für den Längswagen 18 und den Querwagen 19 ausgenutzten Längswellen 26 und 27 bzw.Querwellen 33 und 34 wird eine drastische Minderung der im Verlauf der Bahnbewegung des Werstücks 14 zu überwindenden Reibung erreicht.Zum Antrieb des Kreuzwagens 13 in Längs- und Querrichtung vorgesehene, elektrisch oder hydraulisch steuerbare Antriebsvorrich-. tungen können daher auf eine günstig niedrige Aufnahmeleistung ausgelegt sein und können daher auch mit entsprechend niedriger Steuerleistung betrieben werden.

Im Falle großer Führungslängen kann es,um ein Durchbiegen der Leitführungswellen 26,27 oder 33,34 und bei rotatorischem Antrieb daraus resultierende Schwingungen dieser Gleitführungswellen zu vermeiden,erforderlich sein,zwischen den Endlagerstützen 21-23 oder 36-39 zusätzliche Stützlager vorzusehen.Beim Ausführungsbeispiel gemäß Fig.1 ist für jede der Längsführungswellen 26 und 27 ein zentral angeordnetes Führungslager 46 vorgesehen,das eine die jeweilige Längsführungswelle 26 bzw.27 vollständig umschliessende Lagerschale hat.Bei der gemäß Fig.1 vorgesehenen Anordnung und Ausbildung des Stützlagers 46 und des Längswagens 18 wird dessen Bewegungshub nicht eingeschränkt.

Im Falle sehr großer Längs-und/oder Querführungslängen, kann es aber auch erforderlich sein,mehrere,in regelmässigen Abständen über die Länge der Führungswellen verteilt angeordnete Stützlager vorzusehen.Diese Stützlager, wie auch die Gleitstücke 32 des Längswagens 18 und gegebenenfalls die Gleitstücke 40 des Querwagens 19 müssen dann aber eine Gestaltung haben,die es ermöglicht,daß der Längs-und der Querwagen über diese zusätzliche Lagerstützen hinweggleiten kann.

Die Fig.4 zeigt eine erste mögliche Gestaltung eines zu diesem Zweck geeigneten Stützlagers 47 und eine in Verbindung mit diesem geeignete Gestaltung des sich an der jeweiligen Gleitführungswelle abstützenden Gleitstückes 48. Das Gleitstück 47 hat hier eine den jeweils unteren $180^{O}$-Mantelbereich der Gleitführungswelle 26,27 bzw.33,34 unterstützende halbschalenförmige Gleitfläche 49 und das Gleitstück 48 sich am jeweils oberen $180^{O}$-Mantelbereich der Gleitführungswelle abstützende,ebenfalls halbschalenförmige Gleitfläche 51,wobei zwischen der Lagerstütze 47 und dem Gleitstück 48 ein schmaler Trennspalt 52 mit horizontaler Mittelebene 53 verbleibt.

Wenn,wie in der Fig.4 dargestellt,der Trennspalt 52 zwischen dem Stützlager 47 und dem Gleitstück 48 horizontal verläuft,kann der solchermaßen beidseits geführte Längswagen 18 oder Querwagen 19 von seinen Gleitführungswellen 26 und 27 bzw.33 und 34 auf einfache Weise abgehoben bzw.aufgesetzt werden,was in speziellen Fällen,insbesondere aus Gründen einer einfachen Montage oder einer einfachen Wartung durchaus erwünscht sein kann.Insbesondere bei einer relativ leichten Konstruktion des Kreuzwagens 13 wird es jedoch im allgemeinen erforderlich sein,daß dessen Einzelteile gegen ein Abheben von den Gleitführungselementen gesichert sind.Eine zu diesem Zweck geeignete Gestaltung
einer Lagerstütze 54 und eines in Verbindung mit dieser
geeigneten Gleitstückes 56 ist in der Fig.5 dargestellt.
Auch hier haben die Lagerstütze 54 und das Gleitstück 56
im wesentlichen halbschalenförmige Gleitflächen 57 bzw.58,
wobei jedoch der Trennspalt 52 beispielsweise unter 45$^O$,
gegen die Horizontale geneigt verläuft.Bei der Montage
müssen dann allerdings die Gleitführungswellen 26,27
bzw.33,34 in ihrer Längsrichtung zwischen die bereits
in ihrer Soll-Lage gehaltenen Gleitflächen 57 und 58 des
Stützlagers 54 bzw.des Gleitstückes 56 eingeführt werden.

Es versteht sich,daß Stüczlager 47 oder 54 und Gleitstükke 48 oder 56 mit den in den Figuren 4 und 5 wiedergegebenen Gleitflächenprofilen als sich über die volle Länge
der Gleitführungswellen 26,27 und 33,34 bzw.die volle
Länge oder Breite des Längs- oder des Querwagnes 18 oder
19 erstreckende Teile ausgebildet sein können.

Als Koordinatenantrieb kann,wie in den Figuren 1 und 2
in Verbindung mit dem Querwagen 19 schematisch angedeutet,
ein Spindeltrieb 59 benutzt werden,dessen Antriebsspindel
am Längswagen 18 gelagert ist,und dessen Spindelmutter an
der Unterseite der Querwagenplatte 41 angeordnet und fest
mit dieser verbunden ist,oder wie in Fig.1 in Verbindung
mit dem Längswagen 18 dargestellt,ein Zahnstangentrieb,
dessen Antriebsmotor mit dem Antriebszahnrad am Längswagen 18 montiert ist,und dessen Zahstange maschinengestellfest angeordnet.ist.Es versteht sich,daß zur Erzeugung der Vorschubkräfte auch gegebenenfalls elektrisch gesteuerte hydraulische oder pneumatische Koordinatenantriebe möglich sind.

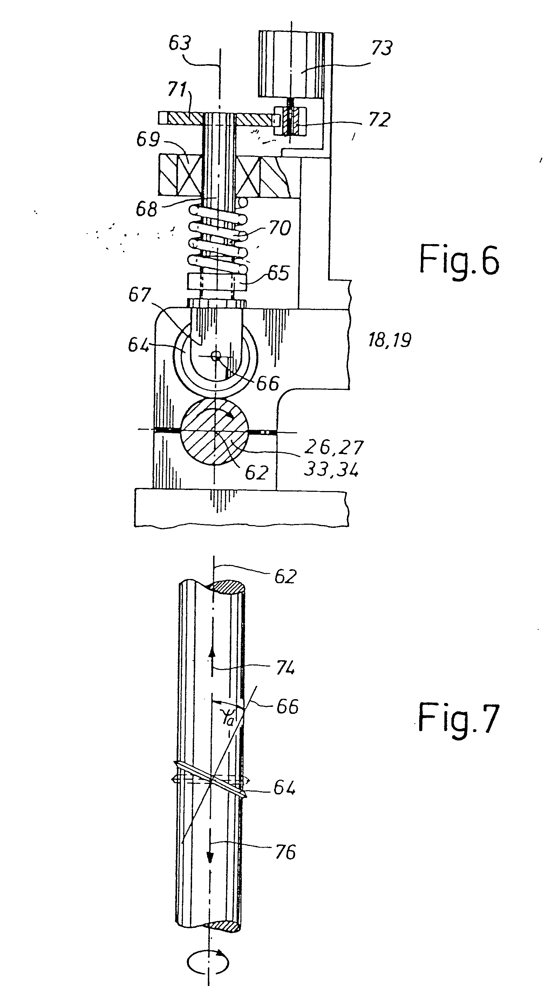

In Anwendungsfällen,in denen geringe Vorschubkräfte für
den Koordinatenantrieb des Kreuzwagens 13 ausreichen,z.B.
bei Gravurmaschinen,die eine leichte Kreuzwagenkonstruktion haben,können auch die rotierenden Längs-und Querführungswellen 26,27 und 33,34 zur Erzielung des X- und Y-
Vorschubs ausgenutzt werden.Eine zu diesem Zweck geeignete Vorschub-Antriebseinheit wird im folgenden anhand der
Fig.6 und 7,auf deren Einzelheiten ausdrücklich verwiesen
sei,hinsichtlich ihres grundsätzlichen Aufbaus und ihrer
Wirkungsweise näher erläutert:

an dem auf den Gleitführungswellen 26,27 oder 33,34 gleitenden Kreuzwagenteil 18 bzw.19 ist,um eine senkrecht zur
Längsachse 62 der Gleitführungswelle verlaufende Achse 63
schwenkbar ein Reibrad 64 gelagert,dessen Drehachse 66
ihrerseits radial zu der Schwenkachse 63 verläuft.Die an
ihrem unteren Ende der Lagergabel 67 für das Reibrad 64
tragende Schwenkwelle 68 ist an einem fest mit dem gleitend verschiebbaren Teil 18,19 verbundenen Loslager 69
gelagert.Das Reibrad ist mittels einer die Schwenkwelle 68
umgebenden,geringfügig vorgespannten Druck-Wendelfeder 70,
die sich einerseits am Lagergehäuse des Loslagers 69 und
andererseits an einem in Längsrichtung der Schwenkwelle 68
verstellbaren Flanschteil 65,z.B.einer Gewindemutter abstützt,mit einer Mindestkraft in Anlage mit dem Mantel der
Gleitführungswelle gehalten.An ihrem oberen Ende ist die
Schwenkwelle 68 mit einem Stirnrad 71 versehen,mit dem das
Abtriebszahnrad eines Stellmotors 73 kämmt.Der mit einem
der Koordinaten-Vorschub-Steuersignale einer nicht näher dargestellten Steuerungseinrichtung beaufschlagt ist.In der in Fig.6 dargestellten und in Fig.7 gestrichelt angedeuteten Stellung des Reibrades verläuft dessen Drehachse 66 parallel zur Längsachse 62 der Gleitführungswelle.Durch gezielte Einstellung eines positiven oder negativen Anstellwinkels $\psi_a$ zwischen den Richtungen dieser Achsen 62 und 66 läßt sich die zwischen dem Reibrad 64 und der Gleitführungswelle vorhandene kombinierte Gleit- und Rollreibung zur Erzielung des Bahnvorschubs ausnutzen. Wenn sich die Gleitführungswelle im Urzeigersinn dreht und,wie in der Fig.7 dargestellt,ein positiver Anstellwinkel $\psi_a$ eingestellt ist,resultiert eine in Richtung des Pfeils 74 wirksame Vorschubskraft,die bei kleinen Anstellwinkeln diesen direkt proportional ist.Dieser Fall ist in der Fig.7 in ausgezogenen Linien dargestellt.Ist dagegen ein negativer Anstellwinkel zwischen der Drehachse 66 des Reibrades 64 und der Längsachse 62 der Gleitführungswelle gewählt,so ist die resultierende Vorschubkraft in Richtung des Pfeils 76,d,h,in entgegengesetzter Richtung gerichtet.

Der Fig.6 entsprechende Vorschub-Antriebseinheiten 61 können an jeder der Gleitführungswellen vorgesehen und gegebenenfalls gekoppelt verstellbar sein,sodaß für den Längswagen 18 und den Querwagen 19 jeweils nur ein Stellmotor 73 benötigt wird.

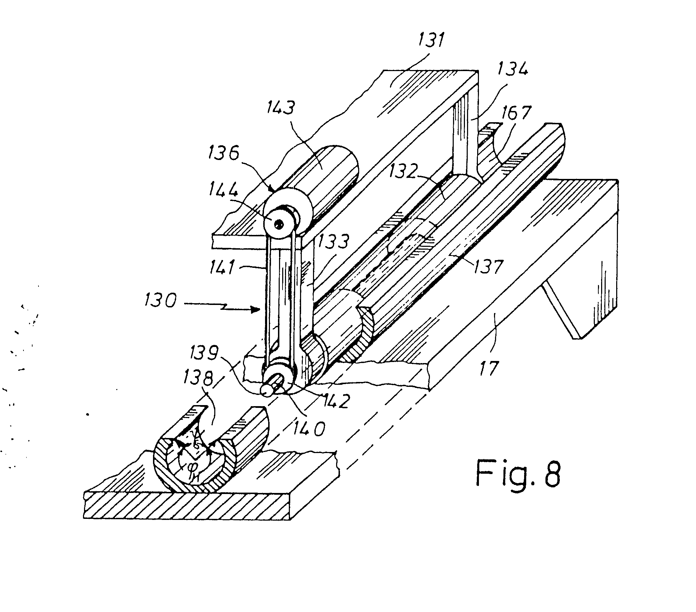

Eine insbesondere für Maschinen mit großen Führungshüben geeignete,erfindungsgemäße Gleitführungseinrichtung 130 ist in stark vereinfachter Darstellung in ihrem grundsätzlichen Aufbau in der Fig.8 wiedergegeben,wobei der Einfachheit der Darstellung halber im wesentlichen nur diejenigen konstruktiven Elemente dargestellt sind,deren Funktion derjenigen einer der Gleitführungswellen 27 gemäß Fig.1 sowie der an dieser gleitenden Teile desjenigen Maschinenelements,das die Vorschubbewegung ausführt,entsprechen.Demgemäß sei angenommen,daß das Maschinenelement 131 gemäß Fig.8 auf eine zum Längswagen 18 gemäß Fig.1 analoge Weise gleitend-verschiebbar an einem Maschinengestell 17 geführt sei.

Die Gleitführungseinrichtung 130 gemäß Fig.8,auf deren Einzelheiten ausdrücklich verwiesen sei,umfaßt einen rotatorisch antreibbaren Führungszylinder 132,der zwischen Lagerstücken 133 und 134 des geführt-verschiebbaren Maschinenelements 131 drehbar gelagert und mittels einer insgesamt mit 136 bezeichneten Antriebsvorrichtung mit wählbarer Umfangsgeschwindigkeit rotatorisch antreibbar ist.

Der Führungszylinder 132 ist in einem beim dargestellten Ausführungsbeispiel gemäß Fig.8 nach oben offenen Schlitzrohr 137 gleitend gelagert,das sich über den insgesamt vorhandenen Vorschubweg erstreckt und an dem Maschinengestell 17 auf geeignete Weise befestigt ist.Ein solches Schlitzrohr 137 bildet jweils eine der für die Vorschubbewegung des verschiebbar-geführten Maschinenelements 131 vorgesehene Führungsbahnen.Der von dem Schlitzrohr 137 umschlossene Mantelsektorbereich $\varphi_M$ ist deutlich größer als 180° und beträgt beim dargestellten Ausführungsbeispiel gemäß Fig.8 ca. 250°-270°,d.h.die in Winkelgraden gemessene Weite $\gamma_S$ des Schlitzes 138 des Schlitzrohres 137 liegt zwischen ca.110° bzw.90°.Diese Schlitzweite $\gamma_S$ ist bei weitem hinreichend,um die Lagerstützen 133 und 134, die durch den Schlitz 138 in das innere des Schlitzroh-

- 20 -

res 137 eintreten,mit einer für die sichere Dreh-Lagerung des Führungszylinders 132 erforderlichen Stabilität ausbilden zu können.

Bei den Ausführungsbeispielen gemäß den Figuren 8,9 und 10 ist angenpmmen,daß der Führungszylinder 132 mindestens an seiner jeweils einen Lagerstütze 133 mittels eines durch deren Lagerschale hindurchtretenden Lagerzapfens 139 gelagert ist,der drehfest mit dem Führungszylinder 132 verbunden ist und einen aus dieser Lagerschale herausragenden,freien Endabschnitt 140 aufweist,an dem die Dreh-Antriebsvorrichtung 136 angekoppelt ist.

Beim Ausführungsbeispiel gemäß Fig8 ist zum Antrieb des Führungszylinders 132 ein einfacher Riementrieb vorgesehen,mit einem Keilriemen 141,der über eine drehfest auf dem freien Endabschnitt 140 des Lagerzapfens 139 des Führungszylinders 132 sitzende Riemenscheibe 142 und eine auf der Antriebswelle eines Antriebsmotors 143 sitzende Riemenscheibe 144 läuft.Es versteht sich,daß bei O-förmiger Verlegung des Keilriemens und der dargestellten Anordnung der Riemenscheiben 142 und 144 deren Durchmesser hinreichend klein gewählt sein muß,daß der Keilriemen 141 die Schlitzwangen des Schlitzrohres 137 nicht berührt.Hierzu kann es auch zweckmäßig sein,oberhalb der Schlitzwangen an der Lagerstütze 133 angeordnete Führungsrollen vorzusehen,die im Bereich des Schlitzes 138 eine Verringerung des Abstandes des in den Schlitz 138 eintretenden und des aus diesem austretenden Trums des Keilriemens 141 vermitteln.

Beim Ausführungsbeispiel gemäß Fig.9,auf deren Einzelheiten

wiederum ausdrücklich verwiesen sei,ist der Antriebsmotor 143 der Antriebsvorrichtung 136 über ein einfaches Kegelrad- Winkelgetriebe mit dem Führungszylinder 132 gekoppelt. Der Antriebsmotor 143 ist so angeordnet,daß die recht- winklig zur Drehachse 145 des Führungszylinders 132 verlaufende Achse 146 seiner Antriebswelle 147 vertikal steht und in der zwischen den Schlitzwangen des Schlitzes 138 verlaufenden Längsmittelebene des Schlitzrohres 137 verläuft.Das auf der Antriebswelle 147 des Antriebsmotors 143 sitzende Kegelrad 148 hat den kleineren Kegelwinkel als das mit ihm kämmende,auf den freien Endabschnitt 144 des Lagerzapfens 139 sitzende Kegelrad 149,das drehfest mit dem Führungszylinder 132 verbunden ist.Die Gestaltung der Antriebsvorrichtung 136 gemäß Fig.9 erlaubt die Verwendung von Schlitzrohren 137 mit relativ geringen Weiten des Schlitzes 138.

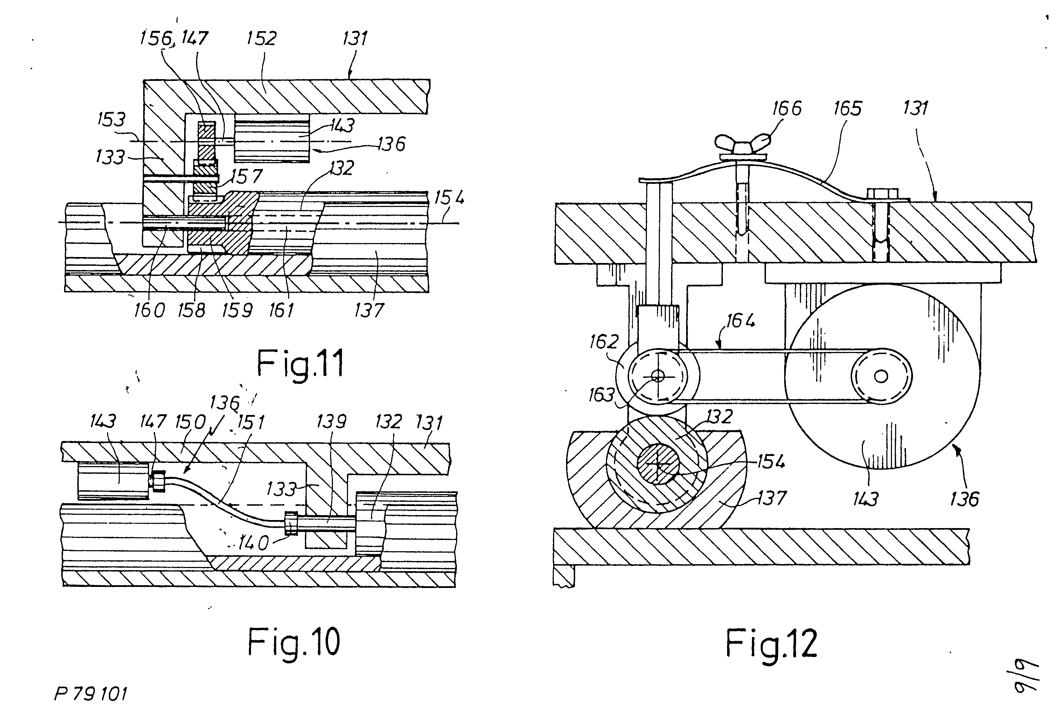

Dasselbe gilt für die Gestaltung und Anordnung der Antriebsvorrichtung 136 gemäß Fig.10,auf deren Einhelheiten wiederum ausdrücklich verwiesen sei.Der Antriebsmotor 143 ist hier an der Unterseite eines Auslegers 150 des geführt- verschiebbaren Maschinenelements 131 angeordnet,und seine Abtriebswelle 147 ist über eine biegsame Welle 151,z.B. eine Schlauchwelle mit dem freien Endabschnitt 140 des Lagerzapfens 139 des Führungszylinders 132 verbunden.

Beim Ausführungsbeispiel gemäß Fig.11,auf deren Einzelheiten wiederum ausdrücklich verwiesen sei,ist der Antriebsmo- tor 143 in unmittelbarer Nähe der einen Lagerstütze 133 an der Unterseite einer die beiden Lagerstützen 133 und 134 miteinander verbindenden Platte 152 des geführt-verschiebbaren Maschinenelements 131 befestigt,derart,daß die Achse 153 seiner Abtriebswelle 147 parallel zur Drehachse 154 des Führungszylinders 132 verläuft.Die Antriebskopplung des Antriebsmotors 143 mit dem Führungszylinder 132 vermittelt ein Stirnradgetriebe,das auf der Antriebswelle 147 des Antriebsmotors 143 sitzendes Zahrad 156,ein mit diesem kämmendes,an der Lagerstütze 133 drehbar gelagertes Zwischenrad 157 und eine mit diesem kämmende Stirnzahnung 158 an dem der Lagerstütze 133 zugewandten Endabschnitt 159 des Führungszylinders 132 umfaßt,dessen Durchmesser an diesem Endabschnitt 158 geringfügig kleiner ist als in seinem an dem Gleitführungs-Schlitzrohr 137 gelagerten Bereich.

Im Falle des Ausführungsbeispiels gemäß Fig.11 kann der Führungszylinder 132 entweder mittels von diesem ausgehender Lagerzapfen an den Lagerstützen 133 und 134 oder mittels von diesen ausgehender Lagerzapfen 160 oder mittels einer zwischen diesn verlaufender,in der Fig.11 gestrichelt angedeuteter Lagerwelle 161 an dem gleitend verschiebbaren Maschinenelement 131 drehbar gelagert sein.

Die Fig.12,auf deren Einzelheiten wiederum ausdrücklicn verwiesen sei,zeigt einen besonders raumspanrenden Aufbau der Dreh-Antriebsvorrichtung 136 für den Führungszylinder 132.Für den rotatorischen Antrieb des Führungszylinders 132 ist ein antreibbares Reibrad 162 vorgesehen,dessen Drehachse 163 parallel zur Längs-bzw.Drehachse 154 des Führungszylinders 132 verläuft.Das Reibrad 162 ist mittels eines zum Riementrieb 141,142,144 gemäß Fig.1 analog aufgebauten Riementriebs 164 mit dem Antriebsmotor 143 der Dreh-Antriebsvorrichtung 136 gekoppelt,der gemäß Fig.6 seitlich von dem Gleitführungs-Schlitzrohr 137 an der dem Schlitzrohr 137 zugewandten Unterseite des

gleitend verschiebbar geführten Maschinenelements 131 montiert ist.Durch Einstellung der Vorspannung eines federnden Elements,z.B.einer Blattfeder 165 mittels einer Stellschraube 166 ist der Anpreßdruck,mit dem sich das Reibrad 162,das in der aus der Fig.12 ersichtlichen Weise an dem verschuebbar geführten Maschinenelement 131 in vertikaler Richtung verschiebbar aber unverdrehbar gelagert ist,am Mantel des Führungszylinders 132 abstützt, einstellbar.

Es ist nicht erforderlich,daß der Führungszylinder 133 auf seiner gesamten Länge an dem Schlitzrohr 137 gleitend gelagert ist.Es genügt auch,wenn er sich,wie in der Fig.8 gestrichelt angedeutet,nur auf Teilen seiner Länge,vorzugsweise im Beriech seiner den Lagerstützen 133 oder 134 benachbarten Endabschnitten an der Gleitfläche 167 des Schlitzrohro 137 abstütz.

Schließlich sind beim Ausführungsbeispiel gemäß Fig.13 zwischen den Lagerstützen 133 und 134 des geführt-verschiebbaren Maschinenelements 31 auf einer sich zwischen diesen erstreckenden Lagerwelle 161 in der aus der Fig.13 ersichtlichen Anordnung zwei Führungszylinder 170 und 171 drehbar gelagert,die an ihren einander zugewandten Stirnseiten mit Kegelzahnungen 172 bzw,173 versehen sind.Mit diesen Kegelzahnungen 172 und 173 kämmt ein auf der Abtriebswelle 147 des Antriebsmotors 143 sitzendes Kegelrad 174.Die beiden Führungszylinder 170 und 171 sind hier mit entgegengesetztem Drehsinn angetrieben.

Es versteht sich,daß die erfindungsgemäße Gleitführungseinrichtung überall dort einsetzbar ist,wo ein verschieb-

bar geführtes Maschinenelement mit möglichst geringem Reibungswiderstand über eine große Führungsstrecke verschiebbar geführt werden soll.Die zur Anpassung der erfindungsgemäßen Gleitführungseinrichtung an den jeweiligen Gebrauchszweck erforderlichen Maßnahmen werden als dem Fachmann zur Verfügung stehend angesehen.

Anton Koukal

Pfarrstraße 6

7326 Heiningen

P 79 101

17.12.1980

PATENTANSPRÜCHE

1. Gleitführungseinrichtung an Arbeitsmaschinen,bei denen ein relativ zu einem feststehenden Maschinenteil geführt bewegbares Maschinenelement,z.B.ein Maschinentisch oder ein Werkzeugkopf eine Vorschubbewegung mit mindestens zeitweise geringer Verschubgeschwindigkeit ausführt,wobei ein zylindrisches Führungselement,z.B. ein Rundstab,vorgesehen ist,dessen Mantelfläche mindestens auf einem Sektorbereich von einer Gleitfläche des geführt verschiebbaren Elements umschlossen ist, dadurch gekennzeichnet,daß das zylindrische Führungselement(26,27;33,34;132)um seine Längsachse drehbar gelagert ist und mit einer Umfangsgeschwindigkeit antreibbar ist,die hinreichend groß ist,um den zwischen den aneinander gleitenden Flächen des Führungselemen-

/ 2

tes(26,27;33,34;132)und des geführten Maschinenteils (18bzw.19 wirksamen Reibungswiderstand in dem für einen niedrigen Wert der Gleitreibung charakteristischen Bereich zu halten.

2. Gleitführungseinrichtung nach Anspruch 1, dadurch gekennzeichnet,daß zwischen Endlagerstützen(21 -24 bzw.36-39),zwischen denen je eines der als drehbare Wellen ausgebildeten Gleitführungselemente(26,27 bzw.33,34)gelagert sind,mindestens ein Stützlager(46) angeordnet ist(Fig.1).

3. Anordnung nach Anspruch 2, dadurch gekennzeichnet,daß eine Anzahl in vorzugsweise gleichen Abständen über die Länge der Gleitführungswellen(26,27bzw.33,34)verteilt angeordnete Stützlager (46;47)vorgesehen sind,die jeweils nur einen Sektorbereich der Gleitführungswellen unterstützende Lagerschalenflächen (49;57)haben und daß die Gleitflächen (51;58)des verschiebbar geführten Maschinenelements(18, 19)sich an den zu den unterstützten Mantelsektorflächen komplementären Sektorbereichen des Mantels der Gleitführungswellen abstützen(Fig.4 und 5).

4. Anordnung nach Anspruch 3, dadurch gekennzeichnet,daß bei zweiseitiger Abstützung des geführt verschiebbaren Maschunenelements(18,19)die Trennspalte(52)zwischen den die Gleitführungswellen unterstützenden Stützlagern(46;47)und den sich an den Gleitführungswellen abstützenden Gleitstücken(56)einen von 180$^O$verschiedenen und vorzugsweise zwischen 60$^O$ und 120$^O$ betragenden Winkel miteinander einschließen (Fig.5)

5. Gleitführungseinrichtung nach einem der vorhergehenden Ansprüche,
dadurch gekennzeichnet,daß an dem geführt-verschiebbaren Maschinenelement(18,19)mindestens ein Reibrad(64) vorgesehen ist,das sich an dem rotierend angetriebenen Führungselement(26,27bzw.33,34) abwälzt,und daß die Drehachse(66)des Reibrads(64)um eine radial zur Längsachse(62)des Führungselements verlaufende Achse(63) schwenkbar ist.(Fig.6).

6. Gleitführungselement nach Anspruch 4,
dadurch gekennzeichnet,daß der Anpreßdruck,mit dem das Reibrad(64)in drehbarer Anlage mit dem Führungselement(26,27 bzw.33,34) gehalten ist,mittels einer vorgespannten Druckfeder(70),deren Vorspannung einstellbar ist,definiert vorgebbar ist(Fig.6).

7. Gleitführungseinrichtung nach Anspruch 1,
dadurch gekennzeichnet,daß der Führungszylinder(132) an dem die Vorschubbewegung ausführenden Maschinenelement(131)drehbar-antreibbar gelagert ist und in einer Führungsbahn(137)des demgegenüber ruhenden Maschinenteils(17),deren Gleitfläche(167)den Führungszylinder(132)auf dem Sektorbereich umschließt,gleitend-verschiebbar gelagert ist.

8. Gleitführungseinrichtung nach Anspruch 7,
dadurch gekennzeichnet,daß als Führungsbahn(137)für den Führungszylinder(132)ein Schlitzrohr(137)vorgesehen ist,durch dessen Schlitz(138)Lagerstücke(133,134) des den Vorschub ausführenden Maschinenelements(131) hindurchtreten,zwischen denen der Führungszylinder(132) drehbar gelagert ist(Fig.8).

/ 4

- 4 -

9. Gleitführungseinrichtung nach Anspruch 8,
dadurch gekennzeichnet,daß der Führungszylinder(132)
zwischen den Lagerstücken des geführten Maschinenele-
ments(131)an einer sich zwischen diesen erstreckenden
Welle(161)oder an Lagerzapfen(160)der Lagerstücke(133,
134)gelagert ist,und daß die für den rotatorischen Antrieb des Führungszylinders(132)vorgesehene Antriebsvorrichtung(136)am Führungszylinder(132)angreift.

10. Gleitführungseinrichtung nach Anspruch 2,
dadurch gekennzeichnet,daß der Führungszylinder(132)
mit mindestens einem von einer seiner Stirnseiten ausgehenden Lagerzapfen(139)an dem gegenüberliegenden
Lagerstück(133,134)des geführten Maschinenelements(131)
gelagert ist und durch dieses hindurchtritt.

11. Gleitführungseinrichtung nach einem der vorhergehenden
Ansprüche 7-10,
dadurch gekennzeichnet,daß der Führungszylinder(132)
mittels eines sich an seiner Mantelfläche abwälzenden
motorgetriebenen Reibrades(162)oder mittels eines angetriebenen Zahnrades(157),das mit einer in einem Abschnitt des Führungszylinders(132)mit vermindertem
Zylinderdurchmesser vorgesehenen Zahnung(158)kämmt,
antreibbar ist(Fig.12 bzw.Fig.11).

12. Gleitführungseinrichtung nach einem der vorhergehenden
Ansprüche 7-10,
dadurch gekennzeichnet,daß der Führungszylinder(132)
mittels eines Riementriebes(141,164)oder über eine
biegsame Welle(151)antreibbar ist(Fig.8bzw.Fig.10).

/ 5

13. Gleitführungseinrichtung nach Anspruch 10, dadurch gekennzeichnet,daß der Führungszylinder(132) mit einem Kegelrad(149)versehen ist,mit dem ein motorgetriebenes Kegelrad(148)kämmt(Fig.9).

14. Gleitführungseinrichtung nach Anspruch 9, dadurch gekennzeichnet,daß auf der sich zwischen den Lagerstücken(133,134)erstreckenden Welle(161)zwei Führungszylinder(170,171)gelagert sind,die mit entgegengesetztem Drehsinn antreibbar sind(Fig.13).

15. Gleitführungseinrichtung nach Anspruch 14, dadurch gekennzeichnet,daß die beiden Führungszylinder(170 und 171)an ihren einander zugewandten Stirnseiten je eine Kegelzahnung(172 bzw.173)haben,die mit einem angetriebenen Kegelrad(174)der Antriebsvorrichtung kämmen(Fig.13).

Fig.1

Fig.2

Fig. 3

Fig.4

Fig.5

P79101

**Fig.6**

18,19

26,27
33,34

**Fig.7**

Fig. 8

131 134 167 143 136 132 144 137 133 130 141 139 138 142 140 17

P 79 101

BLATT 4

0031164

4/9

Fig.9

Fig.13

P 79 101

156,147    152    131

153

133

143

136

132

154

157

160  158  159  161  137

Fig.11

143  147  150  136  151    139  132  131

133

140

Fig.10

166    165    131

162

163

164

132

154

137

143    136

Fig.12

P 79 101

0031164

6/6

BLATT 6

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | CH - A - 431 201 (G. FISCHER) <br> * Spalte 1, Zeilen 1 bis 10; Spalte 2, Zeilen 12 bis 42; Spalte 3, Zeilen 20 bis 27 * <br> -- | 1-4 |
| X | GB - A - 1 038 403 (HAYES ENGINEERS) <br> * Seite 1, Zeilen 9 bis 46; Fig. 1 bis 3 * <br> -- | 1,4, 10,12 |
| X | DE - C - 1 079 421 (M. HOLMQUIST) <br> * Spalte 1, Zeile 38 bis Spalte 3, Zeile 3 * <br> -- | 1-3,12 |
| | US - A - 1 648 441 (BROWER) <br> * Anspruch 3; Seite 1, Zeilen 37 bis 61; Seite 2, Zeilen 120 bis 129 * <br> -- | 1 |
| | DE - C - 907 479 (MAN) <br> * Anspruch 1; Seite 2, Zeilen 23 bis 42 * <br> -- | 1 |
| A | DE - C - 1 259 675 (CINCINNATI MILLING MACHINE CO.) <br> -- | |
| A | DE - A - 2 043 626 (ANNEMÜLLER) <br> -- | |
| A | DE - C - 1 057 411 (UHING) <br> -- <br> ./.. | |

**KLASSIFIKATION DER ANMELDUNG (Int. Cl.³)**

B 23 Q   1/26
F 16 C 29/02

**RECHERCHIERTE SACHGEBIETE (Int. Cl.³)**

B 23 Q   1/00
B 24 B 41/02
F 16 C 29/00
F 16 H 19/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 18-03-1981 | MARTIN |

EPA form 1503.1  06.78

Europäisches
Patentamt

**EUROPÄISCHER RECHERCHENBERICHT**

EP 80 10 8087.0
- Seite 2 -

| | **EINSCHLÄGIGE DOKUMENTE** | | | **KLASSIFIKATION DER ANMELDUNG** (Int. Cl.³) · |
|---|---|---|---|---|
| Kategorie | Kennzeichnung des Dokuments mit Angabe, soweit erforderlich, der maßgeblichen Teile | | betrifft Anspruch | |
| A | US - A - 1 803 165 (BOOTH) | | | |
| | -- | | | |
| A | US - A - 3 473 393 (ZARUBA) | | | |
| | -- | | | |
| A | DE - A - 1 750 159 (DUMORE CO.) | | | |
| | -- | | | |
| A | US - A - 1 673 163 (SCHMELZKOPF) | | | |
| | ---- | | | **RECHERCHIERTE SACHGEBIETE** (Int. Cl.³) |